# DEMANDE DE BREVET EUROPEEN

(11) **EP 1 714 546 A1**
(43) Date de publication de la demande: **25.10.2006**
(21) Numéro de dépôt: 05008764.2
(22) Date de dépôt: 21.04.2005
(51) Int. Cl.: A01K 1/12, A01K 5/02

(54) **Installation de contention d'animaux pour traite collective**

(71) Demandeur: DUPONT Aimé Jean, 79000 Niort (FR)
(72) Inventeur: DUPONT Aimé Jean, 79000 Niort (FR)
(74) Mandataire: Thibon-Littaye, Annick

(57) **Abrégé**

Suivant l'invention, l'installation comporte une série de compartiments de contention (5) qui sont disposés côte à côte le long d'un couloir d'accès commun (6) avec lequel ils communiquent par des portes battantes respectives (11) qui s'ouvrent l'une après l'autre, chacune sous la poussée d'un animal, en pivotant à l'intérieur du compartiment correspondant. Ces compartiments sont associés à un panneau commun (18) de fermeture de l'ensemble des compartiments du module qui est monté mobile en translation verticale sur un bâti fixe pour ouvrir les compartiments, en fin d'une opération de traite, sur un couloir de sortie (7) situé à l'opposé du couloir d'accès. Il est prévu une auge de présentation d'une nourriture d'appât qui est fixée solidaire dudit panneau, ainsi que des moyens distributeurs (48) pour faire passer une dose limitée de nourriture d'un réservoir ménagé dans ladite auge à des mangeoires s'ouvrant à l'intérieur des différents compartiments, dont la mise en oeuvre est déterminée automatiquement pour chaque un groupe d'animaux admis dans ledit module.

## Description

La présente invention concerne les techniques qui sont appliquées dans les fermes pour maintenir les animaux dans une position déterminée au moment de les traire. Il s'agit de ce que l'on appelle communément des installations de contention d'animaux.

L'invention se place dans le contexte d'une traite collective, faisant appel à des installations de contention d'animaux dans lesquelles les animaux sont admis par groupes d'animaux similaires. Dans chaque groupe, ils sont amenés à se disposer en rang pour être immobilisés les uns à côté des autres en regard d'une batterie de trayeuses. La traite terminée, les animaux sont libérés des trayeuses et ils sont conduits à tous quitter l'installation de contention avant l'admission d'un nouveau groupe.

Les opérations de ce genre suivant lesquelles la traite s'effectue de manière collective, en opérant sur plusieurs animaux d'un même groupe simultanément, s'appliquent actuellement principalement aux chèvres et aux brebis. Naturellement, elle peut tout aussi bien s'appliquer à tous animaux du type ovin, caprin ou similaire, ou même à des animaux de taille plus importante, comme les bovins, bien que pour les vaches notamment, il soit en général plus commode d'avoir recours à des dispositifs de contention individuels en trayant chaque animal séparément, souvent en plus à un rythme qui lui est propre.

Par ailleurs, s'il est indéniable que les installations de contention du type auquel s'intéresse l'invention sont utiles, le plus souvent, pour des opérations de traite, donc sur des animaux femelles, on doit bien comprendre que manifestement les mêmes installations pourront être utilisées avec profit pour bien d'autres types de traitement des animaux, que ceux-ci soient mâles ou femelles, par exemple pour leur administrer des soins.

Dans toutes les applications du genre considéré, l'installation suivant l'invention a l'avantage d'organiser une circulation appropriée des animaux en les obligeant à pénétrer chacun dans un compartiment différent, dans un ordre prédéfini, sans laisser planer des incertitudes qui entraîneraient des retards, voire des bousculades faisant craindre des blessures. Par ailleurs, en attirant les animaux par une distribution de nourriture faite au bon moment, juste dans la quantité utile, on limite considérablement les risques de gâchis tout en réduisant les pertes de temps. Dans des modes de mises en oeuvre préférés, l'invention prévoit de compléter l'installation par des moyens de commande automatique qui contribuent encore mieux à assurer les avantages qu'elle apporte, en gérant automatiquement la succession des différentes étapes de déplacement des animaux et de leur traitement, en particulier en ce qui concerne la distribution de nourriture.

Une installation suivant l'invention comporte une série de compartiments, qui sont dimensionnés pour accueillir chacun un animal, une chèvre par exemple. Les différents compartiments sont distribués en ligne par un couloir commun. C'est par ce couloir d'accès que les animaux sont admis à pénétrer dans les différents compartiments. Du côté opposé aux compartiments, le couloir longe une fosse dans laquelle se trouvent les différents appareils de traite respectivement associés à chacun des compartiments.

Chaque compartiment accueillant un animal s'ouvre sur le couloir par une porte battante. En pratique, les différents compartiments sont au même niveau que le plancher du couloir d'accès et ils sont de forme parallélépipédique, tous identiques, avec en section horizontale une longueur et une largeur qui sont adaptées à la corpulence des animaux à recevoir.

En général, il n'est pas besoin de compliquer l'installation par des moyens automatiques de commande de l'ouverture des portes respectives de communication entre le couloir d'accès et les différents compartiments. Il est préférable de prévoir de simples portes battantes qui, pour chaque compartiment, sont montées chacune pivotante autour d'un axe vertical se situant le long de l'arête de la cloison qui le sépare du compartiment suivant, au niveau d'un montant limitant son ouverture sur le couloir. Elles s'ouvrent en se rabattant sur cette cloison sous la poussée d'un animal. Elles se ferment au départ de l'animal, quand elles sont à nouveau libres de pivoter en sens inverse sous l'action de moyens de rappel élastique en position fermée.

Suivant l'invention, on prévoit avantageusement, pour chaque compartiment, un battant de porte unique, qui est monté de telle sorte que d'un compartiment à l'autre les portes se recouvrent partiellement, celle qui passe derrière ne pouvant s'ouvrir que si celle qui passe devant a déjà été ouverte. On considère alors la succession des compartiments dans le sens allant d'une extrémité du couloir d'accès supposée fermée à son extrémité longitudinalement opposée, où est prévue la porte d'entrée des animaux. C'est en effet dans ce sens que les compartiments se remplissent les uns après les autres. Pour que la porte d'un compartiment puisse s'ouvrir sous la poussée d'un animal, il faut d'abord que la porte du compartiment précédent ait été amenée dans sa position ouverte, rabattue contre la cloison qui sépare les deux compartiments adjacents.

Une installation suivant l'invention, dans ses formes de mise en oeuvre préférées, comporte donc une série de compartiments de contention qui sont disposés côte à côte le long d'un couloir d'accès commun, avec lequel ils communiquent par des portes battantes respectives qui s'ouvrent l'une après l'autre, chacune de préférence sous la seule poussée d'un animal à l'encontre de moyens élastiques de rappel en position fermée, en pivotant à l'intérieur du compartiment correspondant. Dans une telle installation, l'invention prévoit avantageusement d'associer à ces compartiments un panneau commun de fermeture de l'ensemble des compartiments qui est monté mobile en translation verticale sur un bâti fixe pour ouvrir les compartiments, en fin d'une opération de traite, sur un couloir de sortie situé à l'opposé du couloir d'accès. De plus, il est avantageusement prévu une auge de présentation aux animaux d'une nourriture d'appât qui est fixée solidaire dudit panneau, ainsi que des moyens distributeurs pour faire passer une dose limitée de nourriture d'un réservoir de l'auge à des mangeoires s'ouvrant à l'intérieur des différents compartiments, moyens distributeurs dont la mise en oeuvre est déterminée automatiquement par le déplacement du panneau avant chaque admission d'un groupe d'animaux.

Plus précisément, suivant des modes de réalisation préférés dans la pratique industrielle, l'invention répond aux particularités qui seront ci-après signalées, étant entendu qu'elles peuvent être mises en oeuvre séparément ou en chacune de leurs combinaisons techniquement opérantes.

C'est ainsi notamment que dans une installation suivant l'invention, il est avantageusement prévu, à l'intérieur de l'auge, des moyens de fermeture d'un fond intermédiaire séparant dans ladite auge une partie haute formant réservoir de nourriture d'appât et une partie basse formant des mangeoires auxquels les animaux ont accès respectivement dans chacun des compartiments où ils ont pénétré. Le réservoir peut présenter une contenance importante, en général calculée pour un nombre de cycles de fonctionnement permettant la traite de tout un troupeau. Par des moyens de commande associés on assure automatiquement l'ouverture du fond intermédiaire en communication du réservoir aux mangeoires pour y délivrer une dose limitée de nourriture après une opération de traite d'un groupe d'animaux et avant l'arrivée d'un groupe suivant. La commande automatique est donc avantageusement déclenchée par la levée du panneau de fermeture des compartiments quand on libère la sortie des compartiments.

Les moyens distributeurs de nourriture sont avantageusement conçus pour permettre un réglage de la dose de nourriture à délivrer dans les mangeoires à chaque cycle de fonctionnement. Cette dose est avantageusement fixée à un minimum nécessaire pour presser les animaux à entrer dans les compartiments, et dans chacun jusqu'au bout. II en résulte un double avantage, à savoir que d'une part on limite ainsi la consommation de nourriture et que, d'autre part on évite qu'il reste de la nourriture non consommée dans les mangeoires au départ des animaux.

Le réglage peut notamment s'obtenir en déterminant une rotation plus ou moins grande autour d'un axe fixe pour un distributeur rotatif. La mise en oeuvre de ces moyens distributeurs est avantageusement déclenchée quand on lève le panneau de fermeture des compartiments, de préférence par un mécanisme qui assure aussi que le distributeur rotatif, par exemple, soit revenu à l'arrêt avant l'admission d'un nouveau groupe d'animaux, qui elle-même n'aura lieu qu'après la descente du panneau en fermeture des compartiments.

Dès lors qu'une installation particulière suivant l'invention implique et la possibilité de fermer la communication entre un réservoir de nourriture d'appât et les mangeoires et un distributeur de dosage de la quantité de nourriture transitant par cette communication, il est souhaitable que le fonctionnement des moyens correspondants soit commandé en synchronisme de manière automatisée. Une solution particulièrement appropriée dans le contexte des applications préférées de l'invention consiste alors à déclencher le fonctionnement des uns et des autres par le panneau lui-même, avantageusement par des moyens mécaniques coopérants qui entrent en jeu quand le panneau est en position levée. On assure ainsi, sous une grande simplicité de construction, pour un faible coût et en toute sécurité de fonctionnement, que les mangeoires laissées vides au départ d'un groupe d'animaux reviennent garnies pour attirer les animaux du groupe suivant.

De plus, dans la configuration préférée dans laquelle les portes battantes sont montées en recouvrement partiel les unes par rapport aux autres, et associées à des moyens élastiques de rappel en position fermée, on court le risque, lorsque les animaux sortent de leurs compartiments respectifs, que la porte d'un des compartiments, en se refermant, vienne coincer l'animal situé dans le compartiment voisin au niveau de ses pattes arrières, si celui-ci n'est pas sorti assez rapidement. Afin de remédier à cet inconvénient, l'invention prévoit avantageusement d'associer les porte battantes à des moyens permettant leur blocage en position ouverte. La mise en oeuvre de ces moyens de blocage est avantageusement synchronisée avec le déplacement du panneau de fermeture des compartiments. Cette synchronisation est réalisée de telle sorte que les portes sont autorisées à se refermer uniquement lorsque le panneau se déplace vers la position de fermeture du couloir de sortie, c'est-à-dire lorsqu'un groupe d'animaux est sorti de l'installation, et que cette dernière est ramenée dans sa configuration initiale avant l'admission du groupe suivant. On s'assure ainsi que les portes battantes ne seront autorisées à se refermer que lorsque la totalité des animaux d'un même groupe aura quitté l'installation. Ceci permet d'éviter que des animaux soient blessés ou affolés au moment de leur sortie.

L'invention sera maintenant plus complètement décrite dans le cadre de ses caractéristiques préférées et de leurs avantages, en faisant référence à une installation de contention de chèvres soumises à une traite collective et en s'aidant des figures que comporte cette description, dans lesquelles :
- la figure 1 représente un plan schématique de l'un des modules à plusieurs compartiments de contention que comporte l'installation considérée ;
- la figure 2 représente schématiquement une vue de côté du module de la figure 1, vu de la droite de celle-ci ;
- la figure 3 représente schématiquement une vue de côté du même module, vu cette fois de la gauche de la figure 1 ;
- les figures 4, 5 et 6 reprennent le schéma de la figure 2 pour trois positions différentes du panneau de fermeture des compartiments au cours d'un cycle de fonctionnement ;
- et les figures 7, 8 et 9 reprennent le schéma de la figure 3 pour les mêmes trois positions différentes du panneau de fermeture des compartiments au cours d'un cycle de fonctionnement.

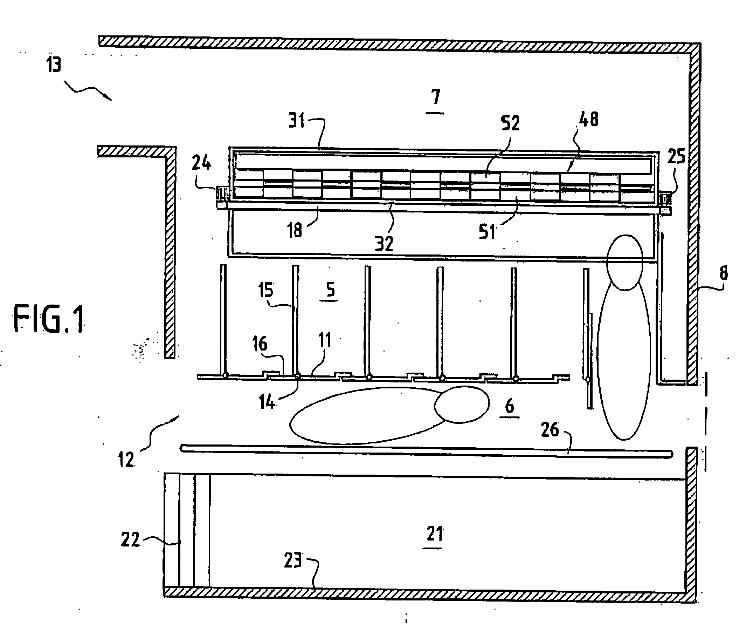

Sur la représentation schématique de la figure 1, en vue de dessus, on a fait apparaître seulement un module à six compartiments de contention, chacun de taille à accueillir une et une seule chèvre. Dans la pratique, il est plus usuel qu'une installation de traite de chèvres telle que celle décrite ici dans le cadre de l'invention, destinée à une exploitation agricole industrielle, comporte plusieurs modules similaires montés en ligne, alors que déjà dans chaque module le nombre de compartiments peut varier d'une application à l'autre. Quoi qu'il en soit, les différents compartiments 5, tous identiques: ou sensiblement tels, sont disposés accolés côte à côte, en série le long d'un couloir d'accès 6, entre celui-ci et un couloir de sortie 7.

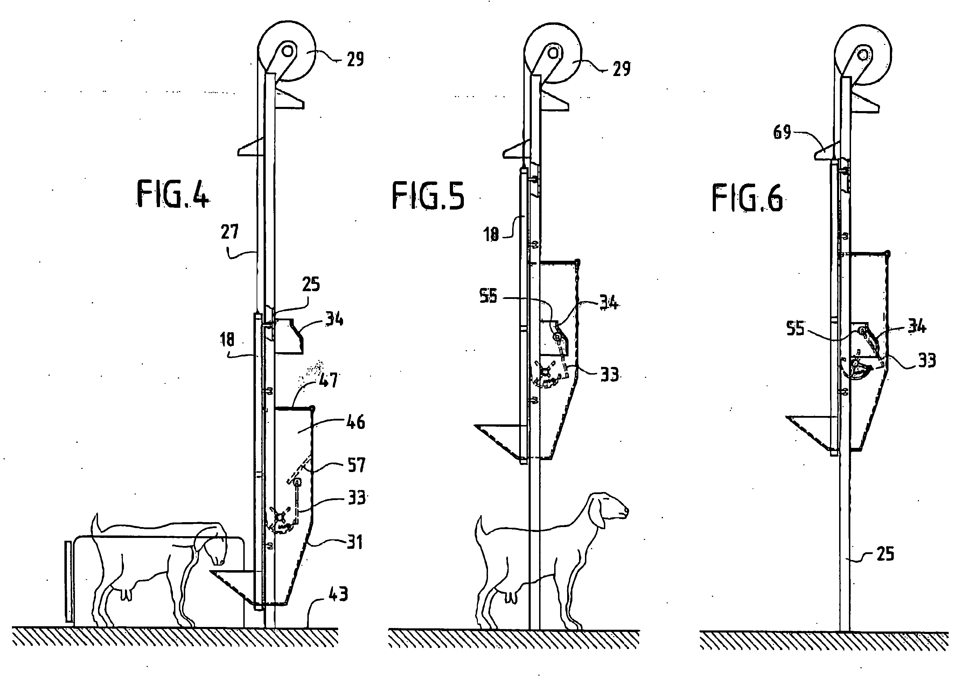

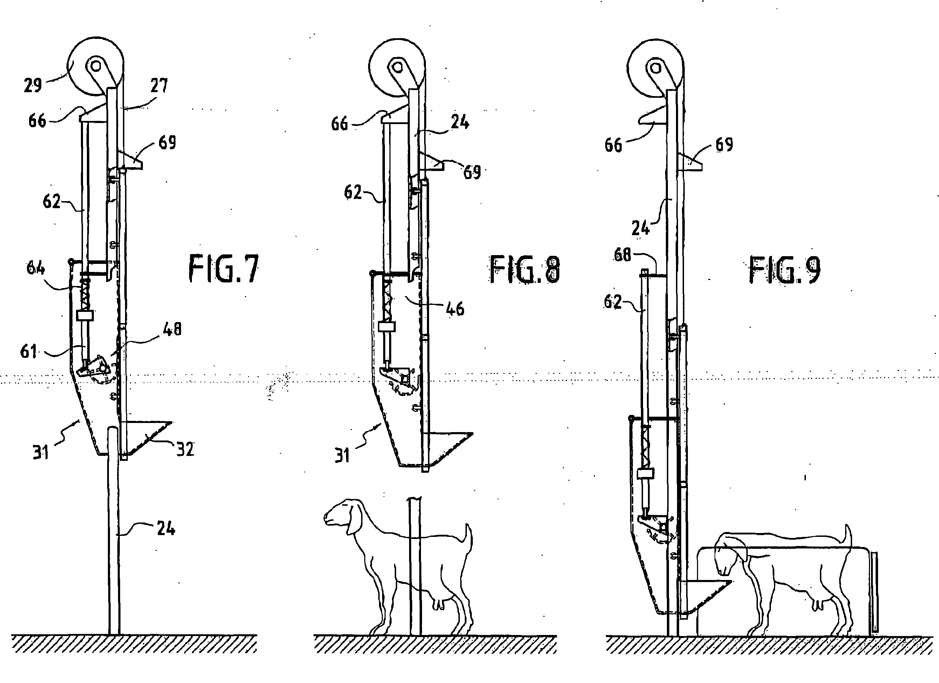

Dans les modes de réalisation représentés sur les figures, et notamment les figures 4 et 9, les cloisons délimitant les compartiments sont fixées au sol. Cette caractéristique n'est cependant nullement limitative de l'invention, et on peut au contraire avantageusement prévoir, dans le cadre de l'invention, de suspendre ces cloisons à une certaine distance du sol, par exemple de l'ordre d'une vingtaine de centimètres. Une telle disposition facilite notamment les opérations de nettoyage des compartiments, en permettant le passage d'outils de nettoyage sous les cloisons. Les cloisons peuvent par exemple être suspendues à une barre support longitudinale, de même longueur que le module, et qui peut elle-même être fixée, de préférence à une hauteur réglable, sur des poteaux verticaux encadrant le module. On peut également envisager dans le cadre de l'invention, d'équiper ces poteaux de pieds de hauteur réglable, afin de faciliter le montage de l'installation sur tous types de sots.

L'ensemble est fermé sur le côté droit de la figure, comme pour un dernier module de l'installation, par une cloison 8 ou une grille ou barrière interdisant le passage des animaux. C'est sur le côté gauche de la figure 1, représenté comme pour un premier module d'une installation complète, que se trouvent d'une part une entrée 12 à l'extrémité correspondante du couloir d'accès 6, d'autre part une sortie 13 à l'extrémité du couloir de sortie 7. L'entrée 12 et la sortie 13 se ferment chacune par une porte qui n'a pas été représentée sur la figure, s'agissant d'une barrière qui coulisse en direction verticale et que l'on soulève à l'ouverture ou que l'on abaisse à la fermeture.

On peut en outre prévoir de disposer dans chaque compartiment une barre dite anti-relevage destinée à empêcher les chèvres de se relever lorsqu'elles se trouvent à l'intérieur du compartiment. Ceci peut par exemple être réalisé au moyen d'une seule barre longitudinale, qui est disposée au-dessus des cloisons des compartiments, sur toute la longueur du module. Une telle barre n'est pas représentée sur les figures. Elle est disposée à une hauteur comprise entre 75 et 85 cm au-dessus du sol, et dans une position telle que lorsque les chèvres occupent entièrement les compartiments, elle se situe juste à l'arrière de leurs têtes, à la naissance du dos. Elle empêche alors les chèvres de se relever. Suivant la nature et la taille des animaux destinés à occuper les compartiments, cette barre peut être placée à une hauteur plus ou moins importante.

Le long du couloir d'accès qui leur est commun, chaque compartiment 5 est équipé d'une porte 11 y donnant accès. Il s'agit d'une porte battante, qui pivote librement autour d'un axe vertical. Chaque pivot 14 se situe, comme représenté, en bout de la cloison 15 qui sépare chaque compartiment 5 du compartiment suivant 4 dans la série. On considère ici les compartiments dans l'ordre dans lequel ils se remplissent. Les portes 11 sont constituées et montées de telle manière que chacune ne puisse s'ouvrir en livrant accès au compartiment correspondant que si celle du compartiment précédent de la série est déjà ouverte.

A cet effet, chaque porte se prolonge au-delà de son pivot 14 par un volet 16 qui recouvre partiellement la porte suivante, en s'étendant sur environ un tiers de la largeur du compartiment suivant. Ainsi, il faut qu'un premier animal du groupe admis dans le couloir d'entrée ait pénétré dans le premier compartiment au fond du couloir et qu'il y maintienne la porte battante correspondante ouverte pour qu'un autre animal puisse pousser la porte du compartiment suivant. Sinon, il est gêné par le volet prolongeant la porte précédente et il ne peut rien faire d'autre que de bloquer celle-ci en position ouverte. Il s'empresse donc d'avancer jusqu'au compartiment suivant immédiatement un compartiment déjà ouvert et occupé. La même situation se reproduit, de proche en proche, pour les compartiments successifs de la série.

A cette étape des opérations, les différents compartiments sont fermés le long du couloir de sortie 7 par un panneau 18 qui est commun à l'ensemble des compartiments de contention. A ce niveau, les animaux sont attirés par de la nourriture d'appât se trouvant dans une auge 31 solidaire du panneau 18, qui s'ouvre sous celui-ci en des mangeoires 32 respectivement associées à chacun des différents compartiments. En pratique, l'auge est continue le long des compartiments du module, à l'arrière du panneau 18, sans séparation entre les mangeoires respectives.

La traite est effectuée simultanément sur les différents animaux qui sont maintenus immobilisés dans les différents compartiments de contention. On utilise des appareils, ou trayeuses, qui, de manière tout-à-fait classique en elle-même, sont disposés dans une fosse 21, à laquelle le personnel humain accède par un escalier 22, inaccessible aux animaux. Cette fosse longe le couloir d'entrée 6 à l'opposé des compartiments de contention 5. En position intermédiaire, la figure 1 montre une barre 26, dite "barre de fesse" dans le métier, qui retient les animaux dans une position restant correcte pour la traite, au cas où ils reculeraient.

La barre anti-relevage, qui n'est pas représentée sur les figures, empêche alors quant à elle les chèvres de se redresser sur la mangeoire, ce qui rendrait leur traite impossible.

Dans la pratique, le module n'est pas fermé par une paroi pleine de l'autre côté de la fosse. Contrairement à la variante de la figure 1, à paroi pleine 23, la fosse est au contraire encadrée par deux modules symétriques, chacun semblable à celui de la figure. La traite est ainsi effectuée sur deux groupes de chèvres simultanément à partir de la même fosse. Par ailleurs, l'installation est de préférence conçue pour être entièrement construite en usine, et même, le cas échéant, pour être livrée toute montée sur le site d'utilisation. Les parois en limite de tout module sont alors avantageusement constituées par un grillage résistant ou par des séries de barreaux suffisamment rapprochés pour empêcher le passage des animaux. Mais dans d'autres cas, il pourrait aussi s'agir de parois pleines, par exemple, constituées par un mur de bâtiment contre lequel l'installation serait apposée.

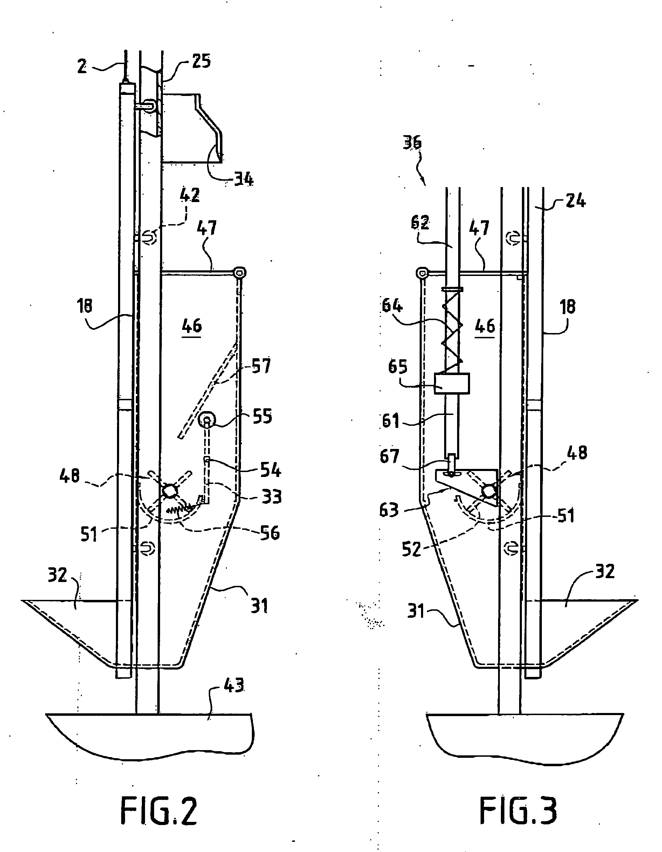

Déjà sur la figure 1, mais mieux encore sur les figures 2 et 3, on voit que le panneau arrière 18 est mobile verticalement, par translation sur lui-même, entre deux poteaux verticaux, 24 et 25, qui l'encadrent, et le long desquels il est monté coulissant. La montée et la descente du panneau sont effectuées au moyen de treuils et de câbles, seuls les câbles étant visibles en 27 sur les figure 2 et 3, alors qu'un treuil apparaît en 29 sur les figures 4 et 7 et suivantes. Le panneau 18 peut avantageusement être guidé dans ses déplacements par des rails courant sur les poteaux 24 et 25. Sur la figure 2, il est en position haute. La voie est alors ouverte en sortie des compartiments 5 et, après la traite, le groupe d'animaux a été transféré hors de l'installation.

La montée et la descente du panneau 18, entraînant avec lui l'auge 31 formant mangeoire pour les différents compartiments de contention, provoquent toute une série de commandes qui se déroulent de manière automatique pour délivrer une dose limitée de nourriture d'appât dans chaque mangeoire, en synchronisme avec le mouvement du panneau. La nourriture en question est sous forme de grains. Elle a pour but d'accélérer la cadence de traitement du troupeau, chaque animal ayant tendance à se précipiter vers la mangeoire dans le compartiment qu'il parvient à ouvrir.

Pour décrire ces moyens automatiques et leur fonctionnement on se référera maintenant plus particulièrement aux figures 2 et 4, 5 et 6 d'une part, aux figures 3 et 7, 8 et 9 d'autre part.

Les figures 2 et 3 représentent de façon schématique le panneau coulissant 18, avec l'auge 31 et ses mangeoires 32, respectivement considérés en vue de la droite de la figure 1 et en vue de la gauche de la même figure.

En liaison avec la figure 1, on y voit plus clairement que la panneau 18 est porté par un cadre métallique à trois traverses longitudinales, telles que la traverse médiane 41, et que son montage en translation verticale est assuré au niveau des montants verticaux de ce cadre, qui portent à cet effet des galets, tels que celui portant la référence 42 sur la figure 2, guidés dans une feuillure ménagée verticalement dans chacun des poteaux 24 et 25. Ces poteaux font partie d'un bâti fixe, reposant au sol 43, qui soutient notamment un longeron supérieur du module sur lequel est monté (situé hors des figures 2 et 3), en partie médiane du module, le treuil 29 de soulèvement du panneau (voir figures 4 et 7), avec l'appareillage associé.

Sur les figures 2 et 3 on voit aussi clairement que l'auge 31 forme à l'arrière du panneau un réservoir de nourriture d'appât 46 fermé par un couvercle 47. Ce couvercle a été représenté pivotant sur l'arête supérieure du réservoir et se rabattant en position fermée vers le panneau. Cette forme de réalisation est avantageuse dans le but que les chèvres quittant les compartiments de contention par le couloir 7 ne puissent ouvrir le réservoir. Vers l'avant du panneau, l'auge 31 déborde sous celui-ci et s'ouvre vers le haut en formant les mangeoires 32. On distingue donc, à l'intérieur de l'auge une partie haute qui forme réservoir de nourriture et une partie basse qui forme les mangeoires.

Enfin, les figures 2 et 3 complètent la figure 1 pour montrer un arbre à palettes 48. Celui-ci constitue un distributeur rotatif, Il est monté horizontal et rotatif dans les jouées latérales de l'auge 31. Il tourne à l'intérieur d'une cuvette fixe 51, de section semi-circulaire, qui forme pour partie une paroi intermédiaire en fond du réservoir interne à l'auge, entre ce réservoir et les mangeoires. Il porte des palettes 52 qui sont diamétralement opposées deux à deux et orientées, en alternance d'un couple à l'autre, dans deux directions perpendiculaires.

Quand l'arbre à palettes 48 tourne dans sa cuvette réceptrice 51, il provoque l'expulsion de la nourriture s'y trouvant en une quantité qui dépend de l'angle dont il tourne, ou éventuellement du nombre de tours qu'il peut faire. La dose de nourriture correspondante est expulsée par dessus le bord de la cuvette 51 et elle tombe dans la partie basse de l'auge formant les mangeoires 32 dans les différents compartiments.

Sur la figure 2, on voit que quand l'auge est en position basse, la communication entre la cuvette 51 et les mangeoires 32 est fermée par une bavette 33, courant tout au long de l'auge, dont le bord inférieur est appliqué sur un siège coopérant formé par le bord libre de la cuvette 51. Cette bavette est montée articulée autour d'un axe horizontal 54 qui est fixe dans l'auge. Sur son bord longitudinal supérieur, opposé par rapport à l'axe d'articulation à son bord inférieur s'appliquant sur la cuvette, elle porte de chaque côté des galets 55. Ceux-ci sont prévus pour coopérer avec des rampes 34 qui sont, elles, fixes sur le bâti, donc plus particulièrement sur les poteaux 24 et 25. En fait, dans la variante de réalisation choisie pour illustrer l'invention, c'est seulement l'un des poteaux qui comporte une telle rampe, à savoir le:poteau 25 de la figure 2.

A l'encontre de la rotation autour de l'axe 54 provoquée par la coopération des galets 55 avec la rampe 34, la bavette 33 est rappelée élastiquement en application sur le bord de la cuvette 51 par un ressort 56. Elle fonctionne ainsi en fermeture du fond du réservoir de l'auge pour isoler ce réservoir des mangeoires. L'ouverture complète de la communication est assurée quand le panneau portant l'auge atteint sa position haute extrême (figure 6), et la fermeture se produit dès que, lorsque le panneau redescend, le galet 55 se dégage de la rampe 34.

Dans une variante de réalisation plus élaborée, on peut avantageusement prévoir de répartir le rôle de la bavette 33 tel qu'illustrée sur les figures entre deux pièces coopérantes, tournant ensemble autour de l'axe d'articulation, et comprenant une languette souple en matériau élastomère, essentiellement faire pour assurer le contact avec le bord de la cuvette, et une lame rigide faisant office de levier pour forcer l'appui sur la ligne de contact sous l'effet du ressort en dehors des situations où elle est soumise à l'action de la rampe commandant l'ouverture de la communication entre partie haute et partie basse de l'auge.

Les figures 4, 5 et 6 illustrent le fonctionnement de la bavette 33 par la position qu'elle occupe pour trois positions différentes du panneau 18. En figure 4 les chèvres sont en position de traite, le distributeur 48 est à l'arrêt, la bavette 33 ferme la communication entre le réservoir 46 et les mangeoires. On remarque à ce sujet qu'elle se situe en dessous d'un baffle fixe de l'auge 57, qui forme lui aussi une partie du fond du réservoir, sous une orientation inclinée de trémie pour guider les grains de nourriture vers le distributeur.

Quand, par le treuil 45, on remonte le panneau 18 depuis sa position basse de fermeture des compartiments de contention (figure 4); les chèvres sont fibres de sortir de ces compartiments. Comme illustré par la figure 5, au voisinage de la position haute du panneau les galets de la bavette 33 entrent en contact avec la rampe 34 et la bavette bascule, comme il est illustré sur la figure 6.

C'est quand la bavette est ainsi en position d'ouverture du réservoir que le distributeur 48 entre en jeu pour faire tomber une dose limitée de nourriture dans la partie basse de l'auge formant les mangeoires.

Le distributeur rotatif est pour cela associé à un dispositif d'entraînement mécanique, portant dans son ensemble la référence 36. Comme le montre notamment la figure 3, ce dispositif comporte essentiellement une tige 61 venant en bout d'un bras de manoeuvre vertical 62, de longueur réglable, dont la translation verticale, quand il est entraîné avec l'auge solidaire du panneau 18, commande la rotation de l'arbre du distributeur 48 par l'intermédiaire d'un ensemble de transmission de mouvement à biellette 63 et plaque manivelle 67. La liaison entre la tige 61 et le bras 62 est soumise à l'action de rappel d'un ressort 64 comprimé entre une butée supérieure et un écrou de réglage de sa raideur 65. Le point d'attache à articulation entre la biellette 63 et la plaque 67 est réglable dans sa position sur cette plaque.

Dans sa liaison avec la plaque 67 l'arbre du distributeur 48 est monté à rotation libre dans le sens lévogyre sur les figures, en correspondance avec la poussée exercée par l'intermédiaire de la tige 61 quand le bras 62 est arrêté dans sa translation verticale solidaire de celle du panneau, par une butée 66 que le bâti fixe de l'installation comporte à cet effet, sur le poteau latéral 24. Une fois ainsi armé, le ressort 64 se détendant, l'arbre du distributeur entraîne avec lui les palettes qu'il porte dans le sens dextrogyre. C'est alors que la quantité de nourriture correctement dosée par le réglage de la course de la tige 61 (donc l'angle de rotation du distrubuteur) passe du réservoir aux mangeoires.

A titre de détail complémentaire, on peut remarquer sur les figures 4 à 7, la présence d'une patte 69, fixée latéralement sur le poteau 25. Il s'agit d'une patte de guidage du bras 62, en zone intermédiaire sur sa hauteur. Le bras 62 coulisse librement à travers elle. Elle est quasi nécessaire dans le cas où l'installation est aussi haute que représenté sur les figures. Dans la plupart des cas d'application de l'invention, il sera préférable de limiter la hauteur à celle strictement nécessaire pour que la levée du panneau mobile laisse passage aux chèvres en sortie des compartiments de contention. C'est d'ailleurs en ce sens qu'il est avantageux, comme il a été décrit, de disposer les organes de commande du distributeur rotatif d'un côté de l'auge, les organes de commande de la bavette 33 de l'autre, de sorte que la rampe 34 et la butée 69 ne se trouvent pas sur le même poteau, mais respectivement sur chacun des deux poteaux qui encadrent et guident le panneau mobile.

On peut aussi remarquer, cette fois sur l'ensemble des figures 4 à 9, que le bâti fixe porte, sur chacun des poteaux 24 et 25, une butée 69, qui constitue une butée de fin de course pour le panneau mobile 18, quand il arrive dans sa position haute extrême (figure 6 et figure 7). Un détecteur de proximité commande le moteur d'entraînement du treuil 29 pour déterminer le retour du panneau 18 vers sa position basse.

L'installation comporte également un système de blocage des portes battantes 11 en position ouverte. Ce système est synchronisé avec le mouvement de montée et descente du panneau 18, de façon telle que les portes 11, une fois ouvertes sous l'effet de la poussée exercée sur elles par les chèvres, sont bloquées dans cette position ouverte, et qu'elles ne sont autorisées à se refermer que lorsque le panneau 18, après être monté jusqu'à sa position haute extrême, entame son mouvement de redescente vers sa position de fermeture du couloir de sortie 7. Ce système de blocage et de synchronisation est de préférence réalisé de façon mécanique, par assemblage de moyens de transmision du mouvement classiques en eux-mêmes à la portée de l'homme du métier. Il permet d'assurer que les portes 11 ne se refermeront que lorsque tous les animaux auront quitté leurs compartiments respectifs, évitant ainsi le risque que la porte d'un des compartiments ne vienne, en se refermant, coincer l'animal situé dans le compartiment adjacent. Une fois tous les animaux sortis, les portes 11 se referment en même temps que le panneau 18 revient en position de fermeture des compartiments. Un nouveau groupe d'animaux est alors admis dans l'installation, et le processus est répété comme pour le groupe précédent.

La description qui précède explique clairement comment l'invention procède d'une manière que ne pouvait prédire l'homme de l'art et comment elle permet d'atteindre les objectifs qu'elle s'est fixés. Mais il en ressort aussi que l'invention n'est pas limitée aux modes de mise en oeuvre qui ont été spécifiquement décrits et représentés sur les figures, et qu'elle s'étend au contraire à de nombreuses variantes se prêtant aux particularités de chaque cas d'espèce. En particulier, le poteau fixe de chaque côté du module peut se dédoubler en deux poteaux solidaires, décalés sur la direction transversale au panneau arrière, et on pourra alors, de chaque côté, réserver l'un au guidage du panneau mobile dans ses déplacements en cours de fonctionnement, l'autre à un rôle de support des organes fixes des moyens mécaniques assurant, d'un côté, la commande du distributeur, et de l'autre, la commande en synchronisme de l'ouverture puis la fermeture de la bavette.

## Revendications

1. Installation de contention d'animaux pour traite collective,
dans laquelle une série de compartiments de contention d'un animal (5) relevant d'une même module sont disposés côte à côte le long d'un couloir d'accès commun (6) avec lequel ils communiquent par des portes respectives (11),
dans laquelle lesdits compartiments (5) sont associés à un panneau commun de fermeture de l'ensemble des compartiments du module (18) qui est monté mobile sur un bâti fixe (24-25) pour ouvrir les compartiments sur un couloir de sortie (7) situé à l'opposé du couloir d'accès,
et qui comporte une auge (31) de présentation d'une nourriture d'appât qui est fixée solidaire dudit panneau, ladite auge comportant un réservoir d'alimentation en communication avec des mangeoires (32) s'ouvrant à l'intérieur des différents compartiments (5),
ainsi que des moyens distributeurs (48) pour faire passer une dose limitée de nourriture du réservoir (46) aux mangeoires (32) dont la mise en oeuvre est déterminée automatiquement par le déplacement du panneau avant chaque admission d'un groupe d'animaux dans ledit module.

2. installation suivant la revendication 1, **caractérisée en ce qu'**elle comporte en outre des moyens (33) de fermeture de la communication entre ledit réservoir et lesdites mangeoires dont la mise en oeuvre est synchronisée avec celle desdits moyens distributeurs.

3. Installation suivant la revendication 2, **caractérisée en ce que** ledit panneau (18) est monté mobile en translation verticale sur lui-même, par coulissement sur des poteaux verticaux (24, 25) du bâti fixe, lesdits poteaux portant des organes fixes (66, 34) propres à déterminer automatiquement la mise en oeuvre desdits moyens distributeurs et celle desdits moyens (33) de fermeture de la communication entre le réservoir et les mangeoires lors de la montée et lors de la descente dudit panneau (18) au voisinage de sa position haute extrême en ouverture de la sortie desdits compartiments (5).

4. Installation suivant l'une quelconque des revendications précédentes, **caractérisée en ce que** ladite auge est située principalement le long du panneau à l'arrière de celui-ci par rapport aux compartiments, notamment en sa partie haute dans laquelle est ménagé ledit réservoir (46), et **en ce que**, en partie basse de l'auge, lesdites mangeoires (32) s'ouvrent sous ledit panneau (18) à l'intérieur des compartiments.

5. Installation suivant l'une quelconque des revendications précédentes, **caractérisée en ce que** les portes des compartiments sur ledit couloir d'accès (6) sont constituées par des portes battantes (11) qui sont montées en recouvrement partiel de manière à ne s'ouvrir que l'une après l'autre, chacune sous la poussée d'un animal à l'encontre de moyens élastiques de rappel en position fermée, en pivotant à l'intérieur du compartiment correspondant.

6. Installation suivant la revendication 5, **caractérisée en ce qu'**elle comporte des moyens de blocage desdites portes (11) en position ouverte, dont la mise en oeuvre est synchronisée avec le déplacement dudit panneau de fermeture (18) de telle sorte que lesdites portes (11) sont autorisées à se refermer uniquement lorsque ledit panneau (18) se déplace vers la position de fermeture du couloir de sortie (17).

7. Installation suivant l'une quelconque des revendications précédentes, **caractérisée en ce que** lesdits moyens distributeurs de nourriture sont constitués par un distributeur rotatif à palettes qui est monté entre deux jouées latérales de l'auge (31) et qui tourne dans une cuvette (51) formant partiellement, à l'intérieur de ladite auge, un fond intermédiaire entre ledit réservoir (46), ménagé en partie haute de l'auge, et lesdites mangeoires (33), ménagées en sa partie basse.

8. Installation suivant la revendication 7, **caractérisée en ce qu'**elle comporte des moyens de commande automatique dudit distributeur déterminant sa rotation d'un angle déterminé, par l'intermédiaire d'un ensemble de transmission de mouvement à biellette (63) et plaque, manivelle (67), lors de la détente d'un ressort (64) qui se comprime quand un bras de manoeuvre (62) entraîné avec l'auge est arrêté par une butée (66) du bâti fixe.

9. Installation suivant la revendication 7 ou 8, **caractérisée en ce qu'**à l'intérieur de ladite auge (31) elle comporte une bavette articulée (33), qui est rappelée élastiquement en application sur le bord de ladite cuvette (51) pour fermer la communication entre ledit réservoir (46) et lesdites mangeoires (32) et dont l'ouverture est assurée automatiquement par la coopération d'un galet (55) qu'elle porte avec une rampe (34) du bâti fixe.

10. Installation suivant la revendication 3, **caractérisée en ce que**lle comporte des moyens distributeurs tels que définis dans la revendication 8 et des moyens de fermeture de la communication entre ledit réservoir et lesdites mangeoires tels que définis par la revendication 9, et en ce ladite butée (66) pour la commande des premiers et ladite rampe (34) pour la commande des seconds sont portés respectivement par chacun de deux poteaux fixes qui encadrent et guident le panneau mobile.
